(19) Europäisches Patentamt European Patent Office Office européen des brevets

(11) **EP 3 445 792 B1**

(12) **EUROPEAN PATENT SPECIFICATION**

(45) Date of publication and mention of the grant of the patent:
**08.01.2020 Bulletin 2020/02**

(21) Application number: **17710978.2**

(22) Date of filing: **20.03.2017**

(51) Int Cl.:
*C08F 210/06* (2006.01)    *D01F 6/30* (2006.01)
*B33Y 70/00* (2015.01)

(86) International application number:
**PCT/EP2017/056515**

(87) International publication number:
**WO 2017/182211 (26.10.2017 Gazette 2017/43)**

(54) **PROPYLENE TERPOLYMER FOR FILAMENT FOR 3D PRINTER**

PROPYLENTERPOLYMER FÜR FADEN FÜR 3D-DRUCKER

TERPOLYMÈRE DE PROPYLÈNE POUR FILAMENT POUR IMPRIMANTE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2016 EP 16166590**

(43) Date of publication of application:
**27.02.2019 Bulletin 2019/09**

(73) Proprietor: **Basell Poliolefine Italia S.r.l.**
**20121 Milano (IT)**

(72) Inventors:
• **DE PALO, Roberto**
**44122 Ferrara (IT)**
• **CAVALIERI, Claudio**
**44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**DE-A1- 4 317 654**

• **O.S. CARNEIRO ET AL: "Fused deposition modeling with polypropylene", MATERIALS & DESIGN, vol. 83, 1 October 2015 (2015-10-01), pages 768-776, XP055312954, AMSTERDAM, NL ISSN: 0264-1275, DOI: 10.1016/j.matdes.2015.06.053**
• **Manfred Kohlen: "ITespresso.de German RepRap liefert lebensmittelkonformes 3D-Druckmaterial - ITespresso.de", , 16 January 2014 (2014-01-16), XP055258389, Retrieved from the Internet: URL:http://www.itespresso.de/2014/01/16/ge rman-reprap-liefert-lebensmittelkonformes-3d-druckmaterial/?print=1 [retrieved on 2016-03-15]**

EP 3 445 792 B1

**Description**

FIELD OF THE INVENTION

The present disclosure relates to a filament comprising a propylene terpolymer to be used in an extrusion-based 3D printer.

BACKGROUND OF THE INVENTION

An extrusion-based 3D printer is used to build a 3D model from a digital representation of the 3D model in a layer-by-layer manner by extruding a flowable modeling material. A filament of the modeling material is extruded through an extrusion tip carried by an extrusion head, and is deposited as a sequence of roads on a substrate in an x-y plane. The extruded modeling material fuses to previously deposited modeling material, and solidifies upon a drop in temperature. The position of the extrusion head relative to the substrate is then incremented along a z-axis (perpendicular to the x-y plane), and the process is then repeated to form a 3D model resembling the digital representation. Movement of the extrusion head with respect to the substrate is performed under computer control, in accordance with build data that represents the 3D model. The build data is obtained by initially slicing the digital representation of the 3D model into multiple horizontally sliced layers. Then, for each sliced layer, the host computer generates a build path for depositing roads of modeling material to form the 3D model.

In the printing process the filament clearly play an important role, changing the material of the filament and the final mechanical and aesthetic properties of the finished object change. Usually in the art filament of polylactic acid (PLA) or acrylonitrile, butadiene, styrene (ABS) polymer or polyamides are used.

One of the most important properties of a filament is constant diameter (usually 1.75 mm or 3 mm) otherwise it is not possible to finely tune the amount of material in the printed object. This property is not easily achieved and depends on the characteristics of the polymer.

Furthermore the filament, once prepared, has to be printable, i.e. it has to be possible to achieve a good adhesion with the plate and among the layers.

Propylene based polymers has been proposed as polymers suitable for making filaments, however from the tests carried out by the applicant the propylene based filaments available on the market gave poor results in the print test.

Therefore there is the need for a propylene based polymers that can be used as a filament in a 3D printer.

SUMMARY OF THE INVENTION

The applicant found a consumable filament for use in an extrusion-based additive manufacturing system comprising a propylene terpolymer containing ethylene and 1-butene or 1-hexene as comonomers having:

- MFR L (Melt Flow Rate according to ISO 1133, condition L, i.e. 230°C and 2.16 kg load) ranging from 1 to 20 g/10 min; and
- xylene solubles measured at 25°C comprised between 3 wt% and 30 wt% ; .

BRIEF DESCRIPTION OF THE DRAWINGS

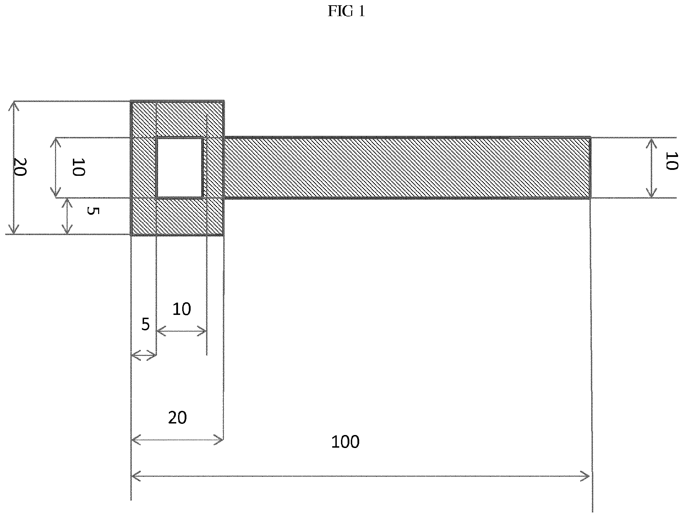

Figure 1 is the front view of the sample used in the print tests of the examples. The measure are given in mm, the sample completely printed is 5 mm thick..

DETAILED DESCRIPTION OF THE INVENTION

The applicant found a consumable filament for use in an extrusion-based additive manufacturing system comprising propylene terpolymer containing ethylene and 1-butene or 1-hexene as comonomers having:

--MFR L (Melt Flow Rate according to ISO 1133, condition L, i.e. 230°C and 2.16 kg load) from 1 to 20 g/10 min, preferably from 2 to 15 g/10 min; more preferably from 3 to 12 g/10 min; and

- xylene solubles measured at 25°C comprised between 3 wt% and 30 wt% ; preferably between 4 wt% and 25 wt%; more preferably between 6 wt% and 15 wt%.

The term terpolymer means that the polymer is formed only by three comonomer such as propylene, ethylene and 1-butene or 1-hexene.

Preferably in the propylene terpolymer of the present disclosure

The ethylene derived units content ranges from 1.0 wt% to 20.0 wt%; preferably from 1.0 to 15.0 wt%; more preferably from 2.0 wt% to 10.0 wt%;

1-butene or 1-hexene derived units ranges from 2.0 wt% to 22.0 wt%; preferably from 3.0 wt% to 18.0 wt%; more preferably from 4.0 wt% to 12.0 wt%;

The sum of the contents of propylene derived units, ethylene derived units and 1-butene or 1-hexene derived units is 100 wt%.

The propylene terpolymer of the present invention can be extruded in a filament having a constant diameter- The diameter of the filament being that one used in the art such as 1.75 mm or 3 mm other possible diameters can also be used. The variation from the nominal diameter is +/- 0.05 mm preferably +/- 0.03 mm.

When amorphous polymeric materials, such as acrylonitrile-butadiene-styrene (ABS) resins and polycarbonate resins are used they have little or no ordered arrangements of their polymer chains in their solid states. This reduces the effects of curling and plastic deformation in the resulting 3D model or support structure.

Crystalline or semicrystalline polymer exhibits superior mechanical properties but due to the crystallinity when used for building 3D model they show undesirable shrinkage effects both when the extruded road is deposited to form a portion of a layer of a 3D model and when the road is cooled. The shrinkage effects renders the crystalline or semicrystalline polymers not usable for the building of 3D object in a an extrusion-based additive manufacturing process.

The applicant found that the propylene ethylene copolymer of the present disclosure can be advantageously used for building a 3D model even being semi crystalline as shown by the amount of xylene soluble material.

The propylene terpolymer of the present disclosure is available in the market. Examples of terpolymer can be Adsyl 5 C30F sold by Lyondellbasell.

The filament object of the present invention can additionally contain additives normally used in the art such as antioxidants, slipping agents, process stabilisers, antiacid, nucleants.

The filament can additionally contains fillers known in the art such as talc, calcium carbonate, wollastonite, glass fibers, glass spheres, carbon derived grades.

Furthermore the filament of the present invention can also contains wood powder, metallic powder marble powder and similar materials normally used for obtaining 3D object having particular aesthetic appearance or improved mechanics.

The following examples are given to illustrate and not to limit the present invention.

EXAMPLES

The data of the propylene polymer materials were obtained according to the following methods:

**Xylene-soluble fraction at 25°C**

The Xylene Soluble fraction was measured according to ISO 16152, 2005, but with the following deviations (between brakets what prescribed by the ISO 16152)

The solution volume is 250 ml (200 ml)

During the precipitation stage at 25°C for 30 min, the solution, for the final 10 minutes, is kept under agitation by a magnetic stirrer (30 min, without any stirring at all)

The final drying step is done under vacuum at 70°C (100 °C)

The content of said xylene-soluble fraction is expressed as a percentage of the original 2.5 grams and then, by difference (complementary to 100), the xylene unsoluble %

**Comonomer (C2 and C4) content determinated by using $^{13}$C NMR**

$^{13}$C NMR spectra of base polymers and their fractions were acquired on a Bruker AV600 spectrometer equipped with cryo probe, operating 150.91 MHz MHz in the Fourier transform mode at 120 °C. The peak of the $S_{\delta\delta}$ carbon (nomenclature according C.J. Carman, R.A. Harrington and C.E. Wilkes, Macromolecules, 10, 3, 536 (1977)) was used as internal reference at 29.7 ppm. About 30 mg of sample were dissolved in 0.5 ml of 1,1,2,2 tetrachloro ethane d2 at 120 °C. Each spectrum was acquired with a 90 ° pulse, 15 seconds of delay between pulses and CPD to remove 1H-$^{13}$C coupling. 512 transients were stored in 65 K data points using a spectral window of 9000 Hz. The assignments of the spectra were made according to [M. Kakugo, Y. Naito, K. Mizunuma and T. Miyatake, Macromolecules, 16, 4, 1160 (2082)] and [E.T .Hsieh, J.C. Randall, Macromolecules, 15, 353-360 (1982)].

Triad distribution was obtained using the following relations:

$$PPP = 100 \, I_{10} / \Sigma$$

$$PPE = 100\ I_6\ /\Sigma \qquad EPE = 100\ I_5\ /\Sigma$$

$$BBB = 100\ I_3\ /\Sigma$$

$$BBE = 100\ I_2\ /\Sigma$$

$$EBE = 100\ I_{11}\ /\Sigma$$

$$XEX = 100\ I_{12}\ /\Sigma$$

$$XEE = 100\ (I_1 +\ I_4)/\Sigma$$

$$EEE = 100\ (0.5\ I_9 + 0.25\ (I_7 + I_8))/\Sigma$$

wherein

$$\Sigma = I_1 + I_2 + I_3 + I_4 + I_5 + I_6 + 0.25\ I_7 + 0.25\ I_8 + 0.5\ I_9 + I_{10} + I_{11} + I_{12}$$

and wherein X can be propylene (P) or 1-butene (B), and $I_1$ to $I_{12}$ are the areas of the corresponding carbon atoms as reported below (only selected triads and assignements being reported):

| Number | Chemical Shift (ppm) | Carbon | Sequence |
|---|---|---|---|
| $I_1$ | 37.64 - 37.35 | $S_{\alpha\delta}$ | PEE |
| $I_2$ | 37.35 - 37.15 | $T_{\beta\delta}$ | BBE |
| $I_3$ | 35.27 - 34.92 | $T_{\beta\beta}$ | BBB |
| $I_4$ | 34.39 - 33.80 | $S_{\alpha\delta}$ | BEE |
| $I_5$ | 33.13 | $T_{\delta\delta}$ | EPE |
| $I_6$ | 30.93 - 30.77 | $T_{\beta\delta}$ | PPE |
| $I_7$ | 30.39 | $S_{\gamma\delta}$ | BEEE |
| $I_8$ | 30.29 | $S_{\gamma\delta}$ | PEEE |
| $I_9$ | 29.97 | $S_{\delta\delta}$ | EEE |
| $I_{10}$ | 29.14 -28.31 | $T_{\beta\beta}$ | PPP |
| $I_{11}$ | 26.70 - 26.55 | $2B_2$ | EBE |
| $I_{12}$ | 24.88 - 24.14 | $S_{\beta\beta}$ | XEX |

The molar content of ethylene (E), of propylene (P) and of 1-butene (B) is obtained from triads using the following relations:

$$E\ (m\%) = EEE + XEE + XEX$$

$$P\ (m\%) = PPP + PPE + EPE$$

$$B\ (m\%) = BBB + BBE+ EBE$$

Other comonomers can be easily determined by using NMR procedures known in the art.

**Melt flow rate (MFR)**

The melt flow rate MFR of the polymer was determined according to ISO 1133 (230°C, 2.16 Kg).

**The following polymers have been used**

PP1

Propylene homopolymer having an MFR 6,5 and a fraction soluble in xylene at 25°C of < 4%

PP2

Commercial filament of diameter 1.75 mm sold under the tradename PP REPRAP BLACK FILAMENT German RepRap PP Filament 600g, a random propylene ethylene copolymer having an ethylene content of 3 wt% an MFR of 2 g/10 min and a fraction soluble in xylene at 25°C of 6.2 wt%.

PP3

Propylene terpolymer sold under the tradename Adsy 5 C30F being a propylene ethylene 1-butene terpolymer having an ethylene content of 3.3 wt% a 1-butene content of 6.3 wt% MFR of 5.2 g/10 min and a fraction soluble in xylene at 25°C of 10.3%

Polymer PP1 and PP3 has been exerted to form a filament having 1.75 mm of diameter. In order to be able to extrude PP1 10wt% of talc has been added.

**Print test**

The printer was a 3D Rostock delta printer. The printer conditions are the followings:

| | | |
|---|---|---|
| Filament diameter | mm | 1,75 ±0.03 |
| Nozzle diameter | mm | 0,4 |
| | | |
| Temperature first layer | °C | 245 |
| Temperature other layers | °C | 245 |
| | | 1 |
| Layer high | mm | 0,2 |
| Temperature plate | °C | 100 |
| Support material to adhere on the plate | | vinylic glue |
| Plate material. | | glass |
| infill | | 100% |
| Printer speed | mm/min | 3600 |
| Speed first layer | | 60% |
| Speed other layers | | 100% |
| Speed infill | mm/min | 4.000 |

The sample to be printed is reported in fig 1. For each filament 5 printer tests have been carried out, the print has been stopped when one side of the object detached from the plane and thus the print of the object was not more possible . The results have bene reported on table 1

table 1

| material | height before detach (Z) (mm) (average measure) |
|----------|--------------------------------------------------|
| PP1*     | 0.8                                              |
| PP2*     | 1.2                                              |
| PP3      | full (5 mm)                                      |
| * comparative | |

From table 1 clearly results that only PP3, that is the material according to the invention, can be used to fully print the sample.

## Claims

1. Use of consumable filament comprising a propylene terpolymer containing ethylene and 1-butene or 1-hexene as comonomers having:

   - MFR L (Melt Flow Rate according to ISO 1133, condition L, i.e. 230°C and 2.16 kg load) from 1 to 20 g/10 min;
   - xylene solubles measured at 25°C comprised between 3 wt% and 30 wt%;

   in an extrusion-based additive manufacturing system .

2. Use of consumable filament according to claim 1 wherein in the propylene terpolymer the xylene solubles measured at 25°C is comprised between 4 wt% and 25 wt%.

3. Use of consumable filament according to claims 1 or 2 wherein in the propylene terpolymer has a MFR L (Melt Flow Rate according to ISO 1133, condition L, i.e. 230°C and 2.16 kg load) ranging from 2 to 15 g/10 min.

4. Use of consumable filament according to anyone of claims 1-3 wherein in the propylene terpolymer the xylene solubles measured at 25°C is comprised between 6 wt% and 15 wt%.

5. Use of consumable filament according to anyone of claims 1-4 wherein in the propylene terpolymer the ethylene derived units content ranges from 1.0 wt% to 20.0 wt% and the 1-butene or the 1-hexene derived units content ranges from 2.0 wt% to 22.0 wt%.

6. Use of consumable filament according to claims 1 or 5 wherein in the propylene terpolymer the ethylene derived units content ranges from 2.0 wt% to 15.0 wt% and the 1-butene or the 1-hexene derived units content ranges from 3.0 wt% to 18.0 wt%.

7. Use of consumable filament according to anyone of claims 1-6 wherein the filament has a constant diameter having a variation of +/- 0..05 mm.

8. Use of consumable filament according to anyone of claims 1-7 wherein the filament has a constant diameter having a variation of +/- 0.03 mm.

9. Use of consumable filament according to anyone of claims 1-8 wherein the filament has a diameter of 1.75 mm or 3 mm +/- 0.05 mm.

10. Use of consumable filament according to anyone of claims 1-9 wherein the filament has a diameter of 1.75 mm or 3 mm +/- 0.03 mm.

11. Use of consumable filament according to anyone of claims 1-10 wherein the propylene terpolymer contains ethylene and 1-butene.

**12.** Use of the filament of claims 1-11 for the production of 3D printed articles.

**Patentansprüche**

**1.** Verwendung eines verbrauchbaren Fadens, der ein Propylenterpolymer umfasst, das Ethylen und 1 -Buten oder 1-Hexen als Comonomere enthält, mit:

- einer MFR L (Schmelzflussrate gemäß ISO 1133, Bedingung L, d. h. 230 °C und 2,16 kg Last) von 1 bis 20 g/10 min;
- einem Gehalt an xylollöslichem Material, gemessen bei 25 °C, zwischen 3 Gew.% und 30 Gew.%;

in einem additiven Fertigungssystem auf Extrusionsbasis.

**2.** Verwendung des verbrauchbaren Fadens nach Anspruch 1, wobei der Gehalt an xylollöslichem Material, gemessen bei 25 °C, in dem Propylenterpolymer zwischen 4 Gew.% bis 25 Gew.% liegt.

**3.** Verwendung des verbrauchbaren Fadens nach Anspruch 1 oder 2, wobei das Propylenterpolymer eine MFR L (Schmelzflussrate gemäß ISO 1133, Bedingung L, d. h. 230 °C und 2,16 kg Last) im Bereich von 2 und 15 g/10 min aufweist.

**4.** Verwendung des verbrauchbaren Fadens nach einem der Ansprüche 1 bis 3, wobei der Gehalt an xylollöslichem Material, gemessen bei 25 °C, in dem Propylenterpolymer zwischen 6 Gew.% bis 15 Gew.% liegt.

**5.** Verwendung des verbrauchbaren Fadens nach einem der Ansprüche 1 bis 4, wobei der Gehalt an von Ethylen abgeleiteten Einheiten in dem Propylenterpolymer im Bereich von 1,0 Gew.% bis 20,0 Gew.% liegt; und der Gehalt an von 1-Buten oder 1-Hexen abgeleiteten Einheiten in dem Propylenterpolymer im Bereich von 2,0 Gew.% bis 22,0 Gew.% liegt.

**6.** Verwendung des verbrauchbaren Fadens nach den Ansprüchen 1 bis 5, wobei der Gehalt an von Ethylen abgeleiteten Einheiten in dem Propylenterpolymer im Bereich von 2,0 Gew.% bis 15,0 Gew.% liegt; und der Gehalt an von 1-Buten oder 1-Hexen abgeleiteten Einheiten in dem Propylenterpolymer im Bereich von 3,0 Gew.% bis 18,0 Gew.% liegt.

**7.** Verwendung des verbrauchbaren Fadens nach einem der Ansprüche 1 bis 6, wobei der Faden einen konstanten Durchmesser mit einer Schwankung von +/- 0,05 mm aufweist.

**8.** Verwendung des verbrauchbaren Fadens nach einem der Ansprüche 1 bis 7, wobei der Faden einen konstanten Durchmesser mit einer Schwankung von +/- 0,03 mm aufweist.

**9.** Verwendung des verbrauchbaren Fadens nach einem der Ansprüche 1 bis 8, wobei der Faden einen Durchmesser von 1,75 mm oder 3 mm +/- 0,05 mm aufweist.

**10.** Verwendung des verbrauchbaren Fadens nach einem der Ansprüche 1 bis 9, wobei der Faden einen Durchmesser von 1,75 mm oder 3 mm +/- 0,03 mm aufweist.

**11.** Verwendung des verbrauchbaren Fadens nach einem der Ansprüche 1 bis 10, wobei das Propylenterpolymer Ethylen und 1-Buten enthält.

**12.** Verwendung des Fadens nach den Ansprüchen 1 bis 11 zur Produktion von 3D-gedruckten Gegenständen.

**Revendications**

**1.** Utilisation de filament fusible comprenant un terpolymère de propylène contenant de l'éthylène et du 1-butène ou du 1-hexène en tant que comonomères possédant :

- un MFR L (indice de fluidité à chaud selon la norme ISO 1133, condition L, c'est-à-dire à 230°C et sous une charge de 2,16 kg) de 1 à 20 g/10 min ;
- des matières solubles dans le xylène, mesurées à 25°C, compris entre 3 % en poids et 30 % en poids ;

dans un système de fabrication additive à base d'extrusion.

2. Utilisation de filament fusible selon la revendication 1, les matières solubles dans le xylène mesurées à 25°C dans le terpolymère de propylène étant comprises entre 4 % en poids et 25 % en poids.

3. Utilisation de filament fusible selon les revendications 1 ou 2, le terpolymère de propylène possédant un MFR L (indice de fluidité à chaud selon la norme ISO 1133, condition L, c'est-à-dire à 230°C et sous une charge de 2,16 kg) dans une plage de 2 à 15 g/10 min.

4. Utilisation de filament fusible selon l'une quelconque des revendications 1-3, les matières solubles dans le xylène mesurées à 25°C dans le terpolymère de propylène étant comprises entre 6 % en poids et 15 % en poids.

5. Utilisation de filament fusible selon l'une quelconque des revendications 1-4, la teneur en motifs dérivés de l'éthylène dans le terpolymère de propylène étant située dans une plage de 1,0 % en poids à 20,0 % en poids et la teneur en motifs dérivés de 1-butène ou de 1-hexène étant située dans une plage de 2,0 % en poids à 22,0 % en poids.

6. Utilisation de filament fusible selon les revendications 1 ou 5, la teneur en motifs dérivés de l'éthylène dans le terpolymère de propylène étant située dans une plage de 2,0 % en poids à 15,0 % en poids et la teneur en motifs dérivés de 1-butène ou de 1-hexène étant située dans une plage de 3,0 % en poids à 18,0 % en poids.

7. Utilisation de filament fusible selon l'une quelconque des revendications 1-6, le filament possédant un diamètre constant doté d'une variation de +/- 0,05 mm.

8. Utilisation de filament fusible selon l'une quelconque des revendications 1-7, le filament possédant un diamètre constant doté d'une variation de +/- 0,03 mm.

9. Utilisation de filament fusible selon l'une quelconque des revendications 1-8, le filament possédant un diamètre de 1,75 mm ou de 3 mm +/- 0,05 mm.

10. Utilisation de filament fusible selon l'une quelconque des revendications 1-9, le filament possédant un diamètre de 1,75 mm ou de 3 mm +/- 0,03 mm.

11. Utilisation de filament fusible selon l'une quelconque des revendications 1-10, le terpolymère de propylène contenant de l'éthylène et du 1-butène.

12. Utilisation du filament selon les revendications 1-11 pour la fabrication d'articles imprimés en 3D.

FIG 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C.J. CARMAN ; R.A. HARRINGTON ; C.E. WILKES.** *Macromolecules,* 1977, vol. 10 (3), 536
- **M. KAKUGO ; Y. NAITO ; K. MIZUNUMA ; T. MIYATAKE.** *Macromolecules,* 2082, vol. 16 (4), 1160
- **E.T .HSIEH ; J.C. RANDALL.** *Macromolecules,* 1982, vol. 15, 353-360